**Europäisches Patentamt**

**European Patent Office**

**Office européen des brevets**

(19)

(11) Numéro de publication: **0 191 684**
**A1**

(12)

# DEMANDE DE BREVET EUROPEEN

(21) Numéro de dépôt: **86400183.9**

(22) Date de dépôt: **29.01.86**

(51) Int. Cl.⁴: **H 04 H 1/00**

(30) Priorité: **31.01.85 FR 8501383**

(43) Date de publication de la demande: **20.08.86**
**Bulletin 86/34**

(84) Etats contractants désignés: **AT BE CH DE GB IT LI LU NL SE**

(71) Demandeur: **DATTEL / DATA Télécommunications S.A., Zac de Pichaury, F-13762 Les Milles Cedex (FR)**

(72) Inventeur: **Petrich, Daniel, La Jeanne, F-84160 Lourmarin (FR)**

(74) Mandataire: **Berger, Helmut et al, Cabinet Z. WEINSTEIN 20, avenue de Friedland, F-75008 Paris (FR)**

(54) **Procédé de diffusion de données par un organisme à un ou plusieurs destinataires et système pour la mise en oeuvre de ce procédé.**

(57) L'invention concerne la diffusion de données par un organisme diffuseur à un ou plusieurs postes destinataires.

L'invention est caractérisée en ce que la diffusion des données est effectuée simultanément aux postes destinataires (B) par voie hertzienne, par l'intermédiaire d'un émetteur hertzien (9) tel qu'une station radio locale, une station de télévision locale ou un réseau privé, qu'on crypte les données avant leur diffusion, selon une clé de cryptage propre à l'organisme, et met à la disposition des postes destinataires (B) abonnés à l'organisme (A) ladite clé de cryptage pour leur permettre de décrypter les données diffusées.

L'invention est notamment applicable à la diffusion de données numériques, alphanumériques ou des logiciels.

EP 0 191 684 A1

0191684

- 1 -

<u>Procédé de diffusion de données par un organisme à un ou</u>
<u>plusieurs destinataires et système pour la mise en oeuvre</u>
<u>de ce procédé.</u>

L'invention concerne un procédé pour la diffusion de données telles que des informations écrites, des données
numériques ou alphanumériques ou des logiciels, par un
organisme diffuseur à un ou plusieurs postes destinataires
et système pour la mise en oeuvre de ce procédé.

Les procédés et systèmes connus, conçus à cette fin sont
du type télématique. Ils présentent de nombreux inconvénients importants. Il sont lourds, coûteux et nécessitent
un acte volontaire que le destinataire doit accomplir
avant la réception des données, car il doit se connecter
sur le centre serveur, c'est-à-dire l'organisme, via le
réseau. De plus, si un grand nombre de postes destinataires
ou récepteurs lancent en même temps une demande d'envoi
de données ou pendant des heures de pointe du réseau
transmetteur, ces demandes ne peuvent pas être satisfaites
immédiatement, en raison de l'encombrement ainsi produit.

La présente invention a pour objectif de proposer un procédé et un système du type indiqué plus haut, qui ne présentent pas les inconvénients susmentionnés.

Pour atteindre ce but, le procédé selon l'invention est
caractérisé en ce que la diffusion des données est effec-

0191684

tuée simultanément aux postes destinataires, par voie hertzienne, par l'intermédiaire d'un émetteur hertzien tel qu'une station radio locale, une station de télévision locale ou régionale ou un réseau privé, qu'on crypte les données avant leur diffusion, selon une clé de cryptage, propre à l'organisme, et met à la disposition des postes destinataires abonnés à l'organisme ladite clé de cryptage pour leur permettre de décrypter les données diffusées.

Selon une caractéristique avantageuse de l'invention, l'organisme précité organise les données à diffuser en services concernant différents domaines d'information tels que la météorologie ou les cours de la Bourse, associe à chaque service un code de sélection que l'on diffuse avec les données relatives à ce service et met à la disposition des postes destinataires les codes de sélection des services auxquels ils sont abonnés.

Selon encore une autre caractéristique de l'invention, chaque série de données relatives à un service est segmentée en un certain nombre de blocs de données, chaque bloc est pourvu d'un numéro séquentiel d'identification et d'une clé de contrôle de la validité des données du bloc, pendant le traitement des données avant leur diffusion, chaque bloc est diffusé plusieurs fois lors de la diffusion des données du service, dont il fait partie, et on effectue dans les postes destinataires ou récepteurs un contrôle individuel de la validité de chaque bloc, à l'aide de la clé de contrôle, détermine à chaque réception d'un bloc, à l'aide du numéro séquentiel d'identification, si ce bloc a déjà été reçu correctement et ignore le bloc lors de ses réceptions suivant sa première réception correcte.

Selon encore une autre caractéristique avantageuse du procédé selon l'invention, on met en forme les données avant leur diffusion de façon qu'elles soient compatibles

0191684

- 3 -

avec les caractéristiques du dispositif émetteur hertzien et puissent être enregistrées sur un support approprié, tel qu'une cassette audio et effectue la lecture et la diffusion des données ultérieurement à un instant propice, avantageusement au cours de la nuit.

Le système pour la mise en oeuvre du procédé selon l'invention est caractérisé en ce que l'organisme comprend un dispositif processeur adapté pour créer les données à diffuser, des moyens codeurs crypteurs pour traiter les données selon des critères propres à l'organisme, un modulateur adapté pour transformer les données en signaux électriques compatibles avec le dispositif émetteur et un dispositif pour enregistrer des données transformées sur un support approprié, le dispositif émetteur comporte un lecteur des données enregistrées sur ledit support et un émetteur hertzien, et en ce qu'un poste destinataire des données diffusées comprend un récepteur hertzien, un démodulateur, des moyens décodeurs-décrypteurs-mémoires, adaptés pour inscrire et conserver en mémoire seulement les données validées et pour lesquelles les critères de codage et de cryptage propres à l'organisme ont été préalablement introduits dans les moyens décodeurs et décrypteurs.

Selon une caractéristique avantageuse du système selon l'invention, les moyens codeurs segmentent les données d'un service en un certain nombre de blocs de données en fonction de la protection désirée ou nécessaire contre des erreurs de transmission, et associe à chaque bloc un numéro séquentiel d'identification et une clé de contrôle de validité des données du bloc, et les moyens crypteurs sont adaptés pour crypter les données selon une clé de cryptage propre à l'organisme.

Selon une autre caractéristique avantageuse de l'invention, le dispositif enregistreur avantageusement du type magnéti-

0191684

- 4 -

que est adapté pour enregistrer les données d'un service, codées et cryptées, plusieurs fois successivement sur le support d'enregistrement précité.

Le système selon l'invention est aussi avantageux par le fait que le modulateur est adapté pour transformer les données en signaux électro-acoustiques et le support d'enregistrement est avantageusement une cassette audio.

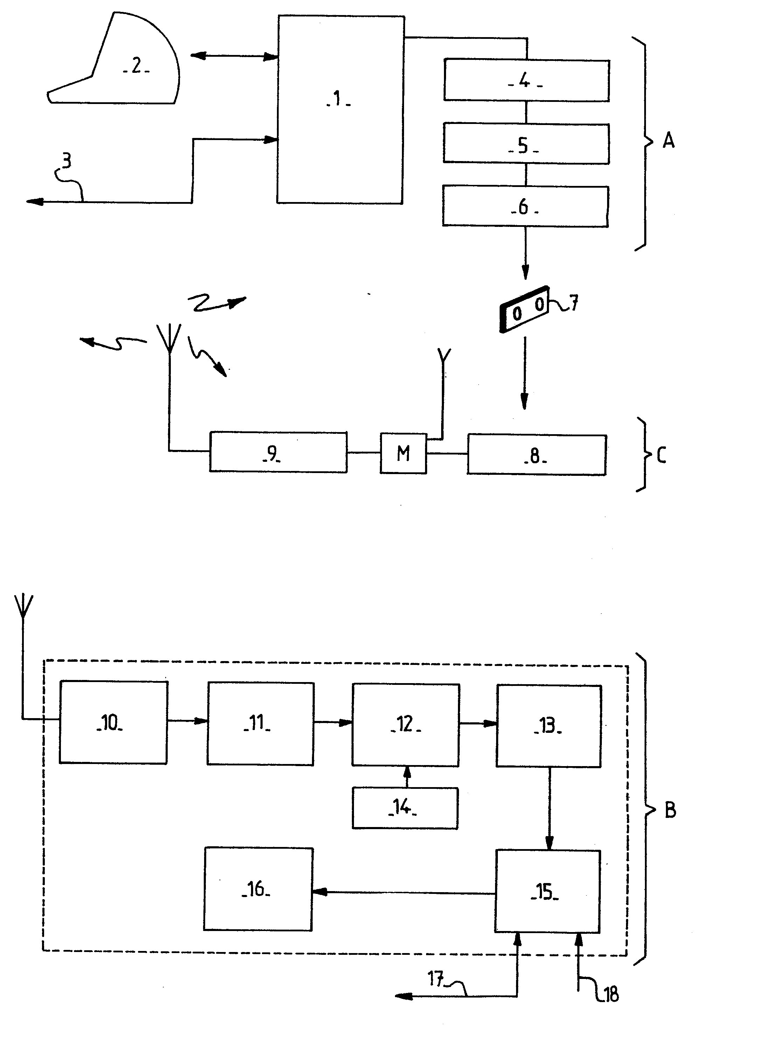

L'invention sera mieux comprise, et d'autres buts, caractéristiques, détails et avantages de celle-ci apparaîtront plus clairement au cours de la description explicative qui va suivre faite en référence à la figure unique donnée uniquement à titre d'exemple et illustrant sous forme d'un schéma-bloc un mode de réalisation de l'invention.

Comme l'indique schématiqument la figure, le système proposé par l'invention est un système de radio-diffusion numérique, qui permet à un organisme A de diffuser des informations vers une pluralité de destinataires B, dont un seul est représenté, par l'intermédiaire d'un poste émetteur C. Les informations à diffuser peuvent être par exemple des informations écrites, c'est-à-dire des textes, des données numériques ou alphanumériques ou des logiciels. L'organisme diffuseur A organise les informations à transmettre aux destinataires, en services chacun concernant un domaine d'information, par exemple la météorologie, des cours de la Bourse etc. Un même organisme pourrait ainsi mettre en oeuvre plusieurs dizaines de services. Pour pouvoir recevoir les données diffusées, chaque poste destinataire ou récepteur B comprend un équipement électronique et informatique spécifique assujettissant la réception des informations diffusées à une autorisation préalable de l'organisme. Ainsi un poste destinataire ne peut bénéficier que des informations des services auxquels il est abonné.

L'organisme diffuseur A met les informations à diffuser en forme, les transforme en données numériques et les traite de façon pour qu'elles soient compatibles avec les caractéristiques de l'émetteur C, tout en prenant les mesures pour protéger les informations à diffuser contre des erreurs de transmission et pour assurer l'exclusivité de la réception d'informations prédéterminées à des postes récepteurs prédéterminés, c'est-à-dire autorisés.

A cette fin, l'équipement de l'organisme comprend une processeur 1 de création des données à diffuser, qui est adapté pour permettre la composition des pages d'informations à l'aide d'un poste à clavier et écran 2 et/ou l'acquisition des données et logiciel par connexion symbolisée par la référence 3, à un ordinateur. Ce processeur associe à la série de données, c'est-à-dire au message, affectées à un service, un code de sélection, tel qu'un numéro. Les données mises en forme par le processeur 1 sont ensuite transmises à un dispositif codeur-crypteur 4. Les moyens de codage sont adaptés pour organiser, c'est-à-dire segmenter chaque série de données d'un service, formant un message, en un certain nombre de blocs de données dont chacun contient un numéro séquentiel d'identification et une clé de contrôle de la validité des données du bloc. Ces clés peuvent être de toute nature connue appropriée. Les moyens de cryptage ont pour fonction de crypter les données d'un message par une clé propre à l'organisme A.

Les données codées et cryptées parviennent à un modulateur 5 qui transforme les données en signaux électriques compatibles avec les caractéristiques de fonctionnement de l'émetteur. Dans le cadre de la présente invention, il est avantageux de transformer les données en signaux électro-acoustiques. Un enregistreur 6, avantageusement un enregistreur magnétique enregistre les données transformées sur un support approprié, par exemple, comme dans le système représenté, sur une cassette audio 7. Lors de cet enregistrement, chaque message à diffuser, organisé en blocs, est enregistré successivement plusieurs fois. Le nombre de répétitions de l'enregistrement d'un même message comme d'ailleurs le nombre et la longueur des blocs d'un message sont fonction de la qualité de la protection contre des erreurs de transmission que l'on désire assurer. Bien entendu, d'autres critères peuvent être retenus pour déterminer les blocs, tels que par exemple la complexité des moyens codeurs et la place qu'il faudrait réserver aux données relatives à la formation et l'identification des blocs.

La cassette audio est ensuite remise à la station émettrice C qui pourrait être une station locale de radio-diffusion ou de télévision ou un réseau privé. Il ressort de la figure, que l'équipement de cette station C, qui est nécessaire à la mise en oeuvre de l'invention comprend un lecteur 8 assurant la lecture de la cassette audio-7 ou plus généralement du support d'enregistrement des données à diffuser, et le dispositif émetteur hertzien 9 proprement dit de la station. Le contenu de la cassette est diffusé sur le réseau hertzien, pendant des heures creuses, généralement dans le cours de la nuit.

Un poste destinataire B adapté pour recevoir les données diffusées par la station C et préalablement organisées par l'organisme A comprend un récepteur hertzien 10, un démodulateur 11 destiné à transformer les signaux audio, de basse fréquence, en données et un équipement électronique et informatique spécifique. Cet équipement comprend un dispositif décodeur-décrypteur 12 et une mémoire 13. Le dispositif décodeur-décrypteur 12 n'est en mesure de décrypter les données reçues que lorsqu'il connaît la clé de cryptage propre à l'organisme A. De plus, il traite seulement les données relatives au message des services dont il possède les numéros de sélection, c'est-à-dire
les données des services auxquels le poste récepteur
est abonné. En d'autres termes, pour qu'un poste
destinataire ou récepteur B puisse bénéficier des
services de l'organisme A, il faut que ce dernier lui ait
communiqué préalablement la clé de cryptage et les numéros de sélection de service. Ces informations autorisant
la réception des données peuvent être indiquées au dispositif décodeur-décrypteur par l'intermédiaire d'un clavier
14 associé au dispositif 12.

Après le décryptage des données reçues, en fonction de la
clé propre à l'organisme, le dispositif 12 contrôle
individuellement la validité des données de chaque bloc,
grâce à la clé de contrôle contenue dans celui-ci. Ce
contrôle peut être de tout type connu approprié et par
exemple être fondé sur un calcul sur des données du bloc.
Les blocs dont la validité a été constatée sont transférés
dans la mémoire 13.

Or, comme il a été indiqué plus haut, une même série de
données affectées à un service est diffusée plusieurs
fois successivement, dans le but d'assurer que le destinataire soit toujours en possession des informations
correctes. Les moyens décodeurs du dispositif 12 vérifient
si un bloc de données arrivant a déjà été transféré
à la mémoire 13 après avoir été validé. C'est le numéro
séquentiel d'identification contenu dans le bloc, qui permet
aux moyens décodeurs d'effectuer cette opération de vérification. Si lors de la diffusion répétée des blocs
de données, le décodeur constate qu'un bloc a déjà été
correctement reçu et mémorisé, ce bloc est ignoré lors
des diffusions suivant la première réception correcte.
Ainsi un bloc ayant subi une perturbation lors de sa transmission n'est pas retenue et est extrait de la série de
données suivante dans laquelle il a été reçue correctement pour la première fois.

0191684

- 8 -

L'équipement spécifique 12, 13 peut être adapté pour que les seules données correspondant à la sélection des services soient conservées dans la mémoire et que les autres soient effacées de celle-ci.

La mémoire 13 peut être reliée, par l'intermédiaire d'une interface 15, à une imprimante 16 ou à un ordinateur externe dont la ligne de connexion est indiquée schématiquement par la référence 17. Ainsi les données validées peuvent être imprimées ou rester en attente de la connexion de l'ordinateur externe, pour être transférées dans celui-ci. De plus, l'interface 15 est adaptée pour que l'imprimante 16 soit accessible localement par l'ordinateur externe via la connexion 17 et/ou par un dispositif MINITEL la connexion duquel est symbolisée en 18.

Concernant la réalisation concrète des différents moyens et dispositifs du système proposés par l'invention, il est à noter que ceux-ci peuvent être de toute nature appropriée. Il importe seulement qu'ils soient en mesure d'accomplir les fonctions qui viennent d'être décrites. Par exemple le processeur 1 et le dispositif codeur-crypteur 4 peuvent être réalisés sous forme de logiques câblées ou sous forme d'une logique programmée. Il est de même pour l'ensemble formé par le dispositif décodeur-décrypteur 12 et la mémoire 13.

Le fonctionnement du système selon l'invention ressort clairement de la description du système qui vient d'être faite. Cette description laisse également clairement apparaître les différentes opérations du procédé. Il n'est donc pas nécessaire de les répéter expressemment.

La description de l'invention se référant à la figure unique représentant à titre d'exemple un mode de réalisation de l'invention, met en relief les avantages que celle-ci procure par rapport à l'état de la technique. L'équipement du centre diffuseur est d'un coût très faible, et ceci indépendamment du nombre des destinataires auxquels des données doivent être transmises. L'équipement spécifique des postes destinataires est également relativement peu complexe et donc peu coûteux. Le dispositif qui équipe le destinataire permet à celui-ci de sélectionner le ou les services qu'il désire recevoir, sans que le destinataire soit obligé d'établir de sa propre initiative d'une liaison avec l'organisme diffuseur, à travers le réseau, pour demander la transmission de données désirées. Il n'a donc plus à accomplir un acte volontaire. De plus, l'invention affranchit les destinataires de l'encombrement du réseau transmetteur tel que le réseau téléphonique publique ou privé. En effet, la diffusion des données, selon la présente invention se fait simultanément vers la totalité des destinataires, par voie hertzienne. Chaque destinataire peut donc recevoir les données correctement et immédiatement, indépendamment du nombre des destinataires abonnés à l'organisme.

Enfin, selon une variante d'exécution du système de l'invention, il est possible d'utiliser un dispositif modulateur M de sous-porteuse à fréquence ultra-sonore entre le lecteur 8 et l'émetteur 9, et ayant deux entrées, l'une reliée à la sortie du lecteur, l'autre recevant les programmes habituels de l'émetteur. Cette variante d'exécution permet ainsi de diffuser les données simultanément avec les programmes habituels de l'émetteur.

0191684

- 10 -

Revendications

1. Procédé de diffusion de données telles que des informations écrites des données numériques ou alphanumériques ou des logiciels, par un organisme diffuseur à un ou plusieurs postesdestinataires, selon lequel la diffusion des données est effectuée simultanément aux postes destinataires (B) par voie hertzienne, par l'intermédiaire d'un émetteur hertzien (9) tel qu'une station radio locale, une station de télévision locale ou régionale ou un réseau privé, on crypte les données avant leur diffusion, selon une clé de cryptage propre à l'organisme, et met à la disposition des postes destinataires (B) abonnés à l'organisme (A) ladite clé de cryptage pour leur permettre de décrypter les données diffusées, caractérisé en ce que l'organisme (A) précité organise les données à diffuser en services concernant différents domaines d'informations tels que la météorologie ou les cours de la Bourse, associé à chaque service un code de sélection que l'on diffuse avec les données relatives à ces services et met à la disposition des postes destinataires (B) les codes de sélection des services auxquels ils sont abonnés, et en ce que chaque série de données relative à un service est segmentée en un certain nombre de blocs de données, chaque bloc est pourvu d'un numéro séquentiel d'identification et d'une clé de contrôle de la validité des données du bloc, pendant le traitement des données avant leur diffusion, chaque bloc est diffusé plusieurs fois lors de la diffusion des données des services, dont il fait partie, et on effectue dans les postes destinataires ou récepteurs (B) un contrôle individuel de la validité de chaque bloc, à l'aide de la clé de contrôle, détermine à chaque réception d'un bloc, à l'aide du numéro séquentiel d'identification, si le bloc a déjà été reçu correctement et ignore ce bloc lors des réceptions suivant la première réception correcte.

2. Procédé selon la revendication 1, caractérisé en ce que, pour réaliser la diffusion répétée d'un bloc d'un message, on diffuse ce message plusieurs fois successivement.

3. Procédé selon l'une des revendications précédentes, caractérisé en ce que l'on met en forme les données avant leur diffusion de façon qu'elle puisse être enregistrée sur un support approprié, telle qu'une cassette audio et effectue la lecture et la diffusion des données ultérieurement à un instant de temps propice, avantageusement au cours de la nuit.

4. Système de diffusion de données, pour la mise en oeuvre du procédé selon l'une des revendications 1 à 3, caractérisé en ce que l'organisme (A) comprend un dispositif processeur (1) adapté pour créer les données à diffuser, des moyens codeurs-crypteurs (4) pour traiter les données selon des critères propres à l'organisme, un modulateur (5) adapté pour transformer les données en signaux électriques compatibles avec le dispositif émetteur et un dispositif (6) pour enregistrer les données transformées sur un support approprié (7), le dispositif émetteur comporte un lecteur (8) des données enregistrées sur ledit support et un émetteur hertzien (9), et en ce qu'un poste destinataire (B) des données diffusées comprend un récepteur hertzien (10), un démodulateur (11), des moyens décodeurs-décrypteur-mémoire (12, 13), adaptés pour inscrire et conserver en mémoire seulement les données validées et pour lesquelles les critères de codage et de cryptage, propres à l'organisme, ont été préalablement introduits dans les moyens décodeur et décrypteur (12).

5. Système selon la revendication 4, caractérisé en ce que le processeur (1) est adapté pour organiser les données en

0191684

- 12 -

service et associer à chaque service un code de sélection
de service.

6. Système selon la revendication 5, caractérisé en
ce que les moyens codeurs (4) segmentent les données
d'un service en un certain nombre de blocs de données en
fonction de la protection désirée ou nécessaire contre
des erreurs de transmission, et associe à chaque bloc un
numéro séquentiel d'identification et une clé de contrôle
de la validité des données du bloc, et les moyens crypteurs
(4) sont adaptés pour crypter les données selon une clé
de cryptage propre à l'organisme.

7. Système selon l'une des revendications 4 ou 5, caractérisé en ce que le dispositif enregistreur (6), avantageusement du type magnétique, est adapté pour enregistrer
les données codées et cryptées d'un service plusieurs
fois successivement sur le support d'enregistrement (7)
précité.

8. Système selon la revendication 7, caractérisé en ce que
le modulateur (5) est adapté pour transformer les données
en signaux électro-acoustiques et le support d'enregistrement
(7) et avantageusement une cassette audio.

9. Système selon l'une des revendications 5 à 8, caractétisé en ce que les moyens décodeur -décrypteur (12) prévu
dans les postes récepteurs (B) sont pourvus d'un dispositif de commande (14) tel qu'un clavier, pour la communication à ces moyens de la clé de cryptage et des ondes
de sélection des services auxquels les postes sont abonnés.

10. Système selon l'une des revendications 4 à 9, caractérisé en ce que le processeur (1) et les moyens codeur
et crypteur (4) de l'organisme (A) sont réalisés sous
forme d'une logique programmée.

11. Système selon l'une des revendications 4 à 10, caractérisé en ce que les moyens décodeur-décrypteur-mémoire (12, 13) sont réaliséssous forme d'une logique programmée.

12. Système selon l'une des revendications 4 à 11, caractérisé en ce que le processeur précité (1) est pourvu d'un dispositif de commande externe (2), avantageusement à clavier et écran, et peut-être connecté (en 3) à un ordinateur pour l'acquisition des données et logiciels.

13. Système selon l'une des revendications 4 à 12, caractérisé en ce que le mémoire (13) d'un poste récepteur (B) peut-être relié, par l'intermédiaire d'une interface (15), à une imprimante (16) et un ordinateur (en 17) pour le transfert des données dans celui-ci.

14. Système selon la revendication 13, caractérisé en ce que l'interface (15) est adapté pour rendre l'imprimante (16) accessible localement par des dispositifs externes tels qu'un ordinateur (en 17) et un dispositif MINITEL (en 18).

15. Système selon la revendication 4, caractérisé en ce qu'il comprend de plus un dispositif modulateur (M) de sous-porteuse à fréquence ultra-sonore entre le lecteur (8) et l'émetteur (9) pour diffuser simultanément les données précitées et les programmes propres à l'émetteur.

**Office européen des brevets**

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-4 196 310  (A.S. FORMAN) <br> * En entier * | 1 | H 04 H    1/00 |
| A | | 4-6,9-15 | |
| Y | GB-A-1 514 941  (BRITISH BROADCASTING CORP.) <br> * Page 1, ligne 59  - page 3, ligne 85; figures * | 1 | |
| A | | 2,3,7,8 | |
| A | DE-A-2 550 624  (SIEMENS) <br> * Revendications * | 1,3 | **DOMAINES TECHNIQUES RECHERCHES (Int. Cl.4)** <br><br> H 04 H |

Le présent rapport de recherche a été établi pour toutes les revendications

| Lieu de la recherche | Date d'achèvement de la recherche | Examinateur |
|---|---|---|
| LA HAYE | 12-05-1986 | MINNOYE G.W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82